# EUROPEAN PATENT APPLICATION

(11) **EP 1 122 259 A2**
(43) Date of publication of application: **08.08.2001**
(21) Application number: 01670001.5
(22) Date of filing: 02.02.2001
(51) Int. Cl.: C07G 5/00

(54) **Extraction of ceroid fraction of cork smoker wash solids with a supercritical fluid**

(30) Priority: 03.02.2000 PT 10241000
(71) Applicant: Labor Qualitas, 2685-338 Prior Velho (PT)
(72) Inventor: Staack Reis Machado, Ana Maria, 1170-097 Lisboa (PT); De Magalhäes Nunes Da Ponte, Manuel Luis, 1495 Cruz Quebrada (PT); Alves Casimiro, Teresa Maria, 2855 Corroios (PT); Alves Ribeiro, Nuno Rui, 2810 Feijo (PT)
(74) Representative: Ferreira, Maria Silvina

(57) **Abstract**

Extraction process wherein a supercritical fluid, or the same fluid in liquid state under near critical conditions, is used to extract the ceroid fraction of cork smoker wash solids and to isolate (C₂₀- C₂₆) long chain aliphatic alcohols, diterpenoid and triterpenoid compounds contained in said fraction.

The extracts containing diterpenes, triterpenoids, long chain aliphatic alcohols, or mixtures thermos enriched in these compounds are submitted to fractionation, these compounds being isolated from the extracts.

Extraction may be carried out in a batch or semi-batch mode at temperatures between 30°C and 100°C, the preferred temperature range being between 30°C and 50°C and at pressures between 6 MPa and 40 MPa (60 bar and 400 bar). Pressure and temperature may be changed during the extraction, or may be kept constant.

The separation is carried out at temperatures between 20°C - 120°C and at pressures between 40 MPa (400 bar) and the atmospheric pressure. The fractionation may be carried out using separators, or in a column.

## Description

### Field of the Invention

This invention concerns a new process of extracting the ceroid fraction of cork smoker wash solids and recovering the fraction of long chain aliphatic alcohols, and diterpenoid and triterpenoid compounds contained in this ceroid fraction, characterized by using a supercritical fluid, or the same fluid in the liquid state under conditions near the critical point.

### Background of the Invention

Cork agglomerates are mainly used in cork plate coverings. The raw material is virgin cork resulting from cork tree pruning operations, dead trees and cork residues from several industrial operations. In the production of cork agglomerates, a stream of steam at about 400 °C is passed through the cork granules. During this cooking operation, the cork granules swell and are compressed against each other and against the autoclave walls. Simultaneously, the fusion of certain cork constituents occurs. These constituents migrate to the exterior of the cork granules promoting their agglomeration and give the dark colour to the resulting block - black cork agglomerate. The water vapor escape carries a significant amount of cork constituents, which settle along the vapor tubing. The cleaning of the vapor tubing gives rise to the so called cork smoker wash solids.

Smoker wash solids are considered inconvenient for black cork agglomerate plants due to the problems they cause on drain systems. They have been considered so far an undesirable material, for which no other use could be found, aside from being sometimes used as waterproofing pavement layer.

Cork is made up of structural elements of polymeric nature, namely suberin, lignin and polysaccharides, and of non structural elements usually called extractives. Extractives may be classified in two groups of main constituents, one group of constituents being called, ceroids, that are solubilized by organic apolar solvents, and another group of phenolic constituents, that are only solubilized by highly polar solvents and water.

The industrial applications of cork only ceroids appeared by the ends of the fourties (Guillemonat A., Revue du Bois et de ses Applications, 4(1), 4-6 1949). Due to the high melting point of cork ceroid, it was envisaged to advantageously replace the commonly used waxes in several end uses, such as fruit coatings, paint and varnishes, waxes, industrial greases, etc.

Several pharmacological activities have been described for long chain aliphatic alcohols that are constituents of the so called cork ceroids. These substances have been tested in the treatment of hypercholesterolhaemia, regeneration of nervous cells, osteoporosis treatment, histamine increase (Masuko-Shoji, Matsumoto-Hiroyuki, Funada-Tadashi, Nippon Oil and Fats Co., Ltd. Pat.Appl.:91/45571 de 20.02.91). Anti-ulcer activity was also found (Carbajal, D; Molina, V. Valdes, S; Arbuzazabala, L; Mas, R. J. Pharm-Pharmacol, 47-49 1995), and the use in the treatment of cornea injuries was also reported (Muller, David F; Summit Technology, Inc. USA Pat Appl. 65640 of 21.5.93).

Long chain aliphatic alcohols may be synthetized by an electrochemical processe which includes complex synthesis and purification steps. The chemical synthesis of these compounds using the respective fatty acids is also difficult, because these raw materials are not easily available.

Diterpenes, having a steroidal structure are another group of cork ceroid constituents, that may be used as precursors of tumor and hormone inhibitors. The compound β-Sitosterol was indicated for the treatment of prostate cancer (Szutrely, H.-P; Med. Klin.; 77; 520; 1982; Ikeda, I.; Sugano, M.; Biochim.Biophys. Acta; 732; 651; 1983; Klippel KF, et al. *A multicentric, placebo-controlled, double-blind clinical trial of (phytosterol) for the treatment of benign prostatic hyperplasia.* British Journal of Urology 80: 427-432, Sep, 1997) and as an inihibitor of cholesterol synthesis (Grundy, S. M.; Mok, M. Y. I.; Lipoprotein Metabolism; M. Greten; Ed. Springer-Verlag; New York; 1973).

Triterpenoids are another group of cork ceroid constituents. These compounds are biologically active and possess a broad spectrum of pharmacological and physiological activities. This makes them potential active ingredients for clinic application (Corey, E.; Ursprung, J; J. A.C.S. 78, 5041; 1956; Bass, W. J.; Phytochemistry, 24, 1875, 1985; Aschawla, V.; J. Scient. & Indian Research, 45, 503, 1986).

These compounds usually are isolated from edible oils and extracts of natural origin by chromatographic processes of difficult and costly scale-up to an industrial scale. The chemical synthesis of these compounds is complex and has a high number of reaction steps.

The first patent (Pilat; Godlewicz.1940. U.S. Patent N° 2188013), in which the extraction fluid (CO₂) is utilized above its critical temperature, appeared in 1940. Nevertheless, only after the work of Zosel ( Zosel, K. 1981 U.S. Patent N° 4260639; Zosel, K. 1982 U.S. Patent N° 4348422) about the application of supercritical fluids in the extraction of natural products, the interest about supercritical fluid technology is renewd.

A fluid is in a supercritical state, when its pressure and temperature are above its critical pressure and temperature. A fluid is in a subcritical state, when its pressure and temperature are below its critical pressure and temperature. For example, the critical pressure of carbon dioxide is 7.39 MPa (72,9 atm) and its critical temperature is 31°C. Ethylene has a critical pressure of 5.07 MPa (50 atm) and a critical temperature of 9,9°C.

Near the critical point, the density of a fluid is of the same order of magnitude of the liquid and its diffusion coefficient is of the same order of magnitude of the diffusion coefficients of the gases. These characteristics allow to carry out extractions with high yields and efficiencies, giving rise to solvent free extracts by a simple fluid decompression. Small pressure and temperature alterations allow to significantly change the solubility of compounds in the extraction fluid enabling to carry out selective extractions.

The use of a fluid in its supercritical state, or of same fluid in its liquid state under near the critical point conditions for extracting the ceroid fraction of cork smoker wash solids and for separating diterpenes, triterpenoids, and long chain aliphatic alcohols from this ceroid fraction is new.

### Detailed Description of the Invention

The present invention consists in contacting a supercritical fluid or said fluid in the liquid state under conditions near the critical point with cork smoker wash solids to obtain extracts containing diterpenes, triterpenes, and long chain aliphatic alcohols. These compounds, or mixtures enriched in these compounds are then separated from the extracts.

As far as these compounds are concerned, cork smoker wash solids is an unique material, because it contains these compounds in extraordinarily high amounts compared to what is currently found in nature. The compounds to be extracted from this raw material are C₂₀ to C₂₆ long chain aliphatic alcohols, particularly docosanol, tetracosanol and hexacosanol. Within the triterpenoid and diterpene groups the following compounds may be particularly considered : friedelin, cerin, friedelanene-(2), friedelanene-(3), friedelanodione-(2,3), betulin, betulínic acid, β-sitosterol, campesterol.

Any fluid in its supercritical state, or the same fluid in its liquid state under near critical conditions may be used, but carbon dioxide is preferred, due to its low cost, non inflammability and due to the fact that it is possible to carry out the extractions at temperatures near ambient conditions. Together with carbon dioxide an organic cosolvent may be used. This cosolvent may be chosen from the group of low molecular mass alcohols, aromatic hydrocarbons, aliphatic hydrocarbons, cyclic ethers, aliphatic ketones to increase the efficiency of carbon dioxide as extracting fluid. Ethanol is the preferred organic solvent, due to its non-toxicity at the concentrations used.

The advantages of this process when compared with the processes included in the state of the art are the following:
- The process of the invention is simple; it is composed of a small number of steps and allows a selective high efficiency fractionation.
- The extraction is carried out at temperatures near room temperature and in an inert atmosphere not causing changes of the extract characteristics.
- This process is particularly efficient under the point of view of energy consumption.
- Large amounts of organic solvents are not used therefore, the process is non-pollutant, the extracts are free of toxic organic solvent residues and the risks associated with handling and storing large amounts of an inflammable solvent are avoided.

In the present invention, the extraction is carried out at temperatures within the range of 30°C - 100°C, the preferred temperature range being 30°C - 50°C, and under the pressure range of 6 MPa ― 40 MPa (60 bar - 400 bar). The separation may be carried out at temperatures in the range of 20 °C - 120 °C and under pressures between 40 MPa (400 bar) and the atmospheric pressure.

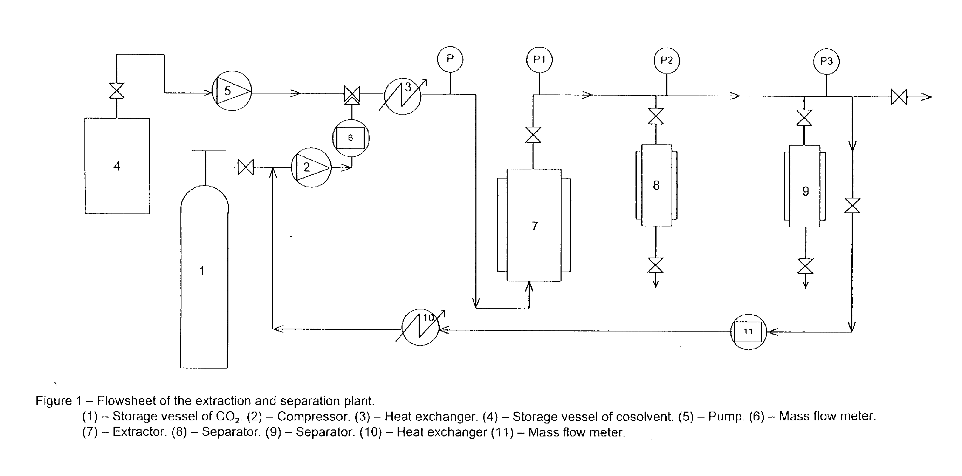

The extraction and separation of the target compounds may be carried out in a plant according to the schema of Figure 1.

Cork smoker wash solids are placed in the extractor (7). This extractor is equipped with a heating jacket that allows to control the extraction temperature.

CO₂ from the vessel (1) is pressurized by the compressor (2) until the desired pressure is reached and heated to the desired temperature by the heat exchanger (3). CO₂ flow rate is measured by the flow meter (6). If one wishes to carry out an extraction with a cosolvent, it may be directly added in the extractor (7), or led from the vessel (4) through the pump (5) to the heat exchanger (3). The extracting fluid at the pressure P1 loaded with the extracted substances passes through a pressure reducing valve and enters at pressure P2 into the separator (8) equipped with a heating jacket, which allows to control the separation temperature. A fraction enriched in aliphatic alcohols is isolated in this separator. The extracting fluid loaded with the extracted compounds passes through a second pressure reducing valve and enters into the separator (9) at pressure P3. This separator is also equipped with a heating jacket to enable the control of the separation temperature. A fraction enriched in diterpenic and triterpenic components is obtained in the separator (9). The extracting fluid is recycled and its temperature is adjusted by the heat exchanger (10). The flow rate of the recycled fluid is controlled by the flow rate meter (11). The extraction may also be carried out by several extractors in parallel, so that extraction can be carried out in a semi-continuous mode. The separation may be carried out by reducing the extraction pressure P1 and at different temperatures, or by keeping the constant pressure (P1=P2=P3, or P1=P2≠P3) and changing the temperature of the separators (8) and (9). The separation of the several extraction components may be carried out using more than two separators in series. Separation temperature and pressure may be kept constant during all the extraction/separation, or may be changed during the extraction time.

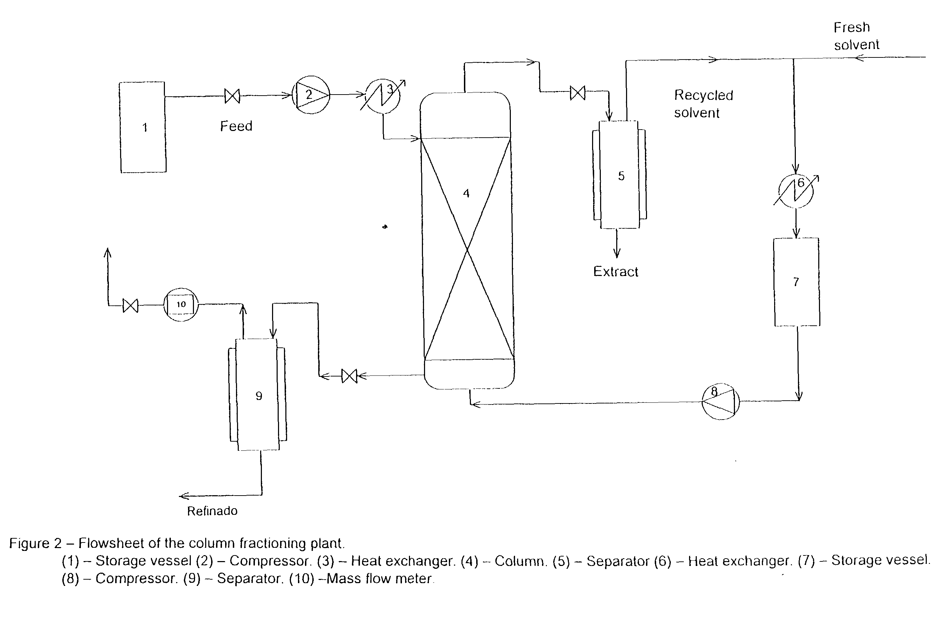

The extracts obtained in the separators, in turn, may be subjected to a column separation according to Figure 2.

The column feeding (4) is passed through a compressor (2) and through a heat exchanger (3) in order do adjust the temperature and the pressure of column fractionation. Carbon dioxide enters through the bottom of the column and exits through the top, loaded with the dissolved extract. The pressure is reduced so that the precipitation of the extract occurs in the separator (5) and the CO₂ is recycled and led to a reservoir (7). The extract is periodically discharged from the separator (5) and as well as the refinate from the separator (9). The mass flow meter (10) allows the adjustment of CO₂ flow rate.

The separation of the aliphatic alcohols is mainly based upon the difference of their vapor pressures. Thus, the separation can be carried out at temperatures slightly above the extract melting point: 75 °C - 120 °C, or preferably at lower temperatures, taking advantage of the crioscopic depression effect, due to the extracting fluid addition. The extract enriched in aliphatic alcohols may by fed to the column at temperatures above its melting point, or may feed the column as a solution in CO₂ at temperatures in the range 30°C - 75 °C and pressures between 2,5 MPa ― 16 MPa (25 bar - 160 bar).

The separation of components in the ceroid extract is based upon the difference of solubilities and vapor pressures of the components This extract feeds the column as a solution in CO₂ the preferred temperature range being 20 °C - 60 °C and the preferred pressure range 8 MPa ― 16 MPa (80 bar - 160 bar).

The present invention is illustrated by the non-limiting following examples.

### Example 1

50 g of cork smoker wash solids were extracted at constant temperature of 40°C and at a pressure of 30 MPa (300 bar) according to the process illustrated in Figure 1. The compounds dissolved in CO₂ were separated at atmospheric pressure and at room temperature 11.5 g of extract were obtained. In the separator (8) 4.3 g of a white powder was obtained, the contents of which in tetracosanol, docosanol e hexacosanol are respectively, 11.6%, 6.9% e 2.8%. In the separator (9), 7.2 g of a yellowish waxy extract was obtained, the contents of which in friedelane-2,3-dione, friedelin e β-sitosterol are respectively 21.2%, 16.8% and 4.4%.

### Example 2

1 kg of white powder extract obtained in the separator (8) of Fig. 1 was placed in the vessel (1) of Fig. 2 at a temperature of 55 °C. Carbon dioxide was introduced at a pressure of 150 bar inducing the melting of the white solid above referred. The fluid constituents are the extracted substances and a significant amount of dissolved CO₂. This fluid was introduced in the column (4) in countercurrent, according to the process represented in Figure 2, at a pressure of 15 MPa (150 bar). This process allowed the fractionation of the mixture introduced in the column, yielding a refinate collected in the separator (9) and a mixture of alcohols with the following composition:

| Compound | Composition % |
|---|---|
| Eicosanol | 0.9 |
| Heneicosanol | 4.7 |
| Docosanol | 30.2 |
| Tricosanol | 1.3 |
| Tetracosanol | 50.6 |
| Hexacosanol | 12.3 |

## Claims

1. Extraction process wherein a supercritical fluid, or the same fluid in the liquid state under near critical conditions is used to extract the ceroid fraction of cork smoker wash solids and to recover long chain aliphatic alcohols and diterpenoid and triterpenoid compounds contained in said ceroid fraction.

2. Process according to claim 1, characterized thereby that the extracts containing diterpenes, triterpenoids and long chain aliphatic alcohols, or mixtures enriched in these compounds are further submitted to fractionation, these compounds being subsequently isolated from the extracts.

3. Process according to claims 1 and 2, characterized thereby that the fluid in supercritical state, or the same fluid in liquid state under near critical conditions is carbon dioxide.

4. Process according to claims 1 and 2, characterized by using a cosolvent chosen among the group of low molecular mass alcohols, aromatic hydrocarbons, aliphatic hydrocarbons, cyclic ethers and aliphatic ketones together with the fluid in supercritical state, or the same fluid in liquid state under near critical conditions.

5. Process according to claims 1-4, characterized thereby, that the preferred cosolvent is ethanol.

6. Process according to claims 1 and 2, characterized by carrying out an extraction in batch or semi-batch mode at temperatures between 30°C and 100°C, the preferred temperature range being between 30°C and 50°C, and at pressures between 6 MPa and 40 MPa (60 bar and 400 bar), wherein the pressure and temperature may be changed during the extraction, or may be kept constant.

7. Process according to claims 1 and 2, characterized by performing the separation at temperatures between 20°C - 120°C and at pressures between 40 MPa (400 bar) and the atmospheric pressure, wherein the fractionation may be carried out using separators, or in a column.

8. Process according to claim 7, characterized thereby that the extract rich in aliphatic primary alcohols having 20 to 26 carbon atoms is introduced in the fractionation column at a temperature above its melting point or as a solution in a supercritical fluid, or the same fluid in liquid state under near critical conditions.

9. Process according to claim 7, characterized thereby that the ceroid extract rich in diterpenoids and triterpenoids containing, among others the following compounds friedelin, cerin, friedelanene-(2), friedelanene-(3), friedelanodione-(2,3), betulin, betulinic acid, β-sitosterol, campesterol is introduced in the fractionation column as a solution in a supercritical fluid, or in the same fluid in liquid state under near critical conditions.

10. Mixtures of aliphatic primary alcohols having 20 to 26 carbon atoms for medicinal use obtained from cork smoker wash solids having the following composition: eicosanol 0 % - 5%; heneicosanol 1% - 7%; docosanol 20 - 40%; tricosanol 0 % - 5%; tetracosanol 40% - 60%; hexacosanol 5% - 20%.
